# EUROPEAN PATENT APPLICATION

(11) **EP 4 711 298 A1**
(43) Date of publication of application: **18.03.2026**
(21) Application number: 24869680.9
(22) Date of filing: 18.04.2024
(51) Int. Cl.: B65D 19/38

(54) **LOADING TRAY AND FORMATION APPARATUS**

(30) Priority: 27.09.2023 CN 202311262384
(71) Applicant: Contemporary Amperex Technology Co., Limited, Ningde, Fujian 352100 (CN)
(72) Inventor: TANG, Renfei, Ningde, Fujian 352100 (CN); YU, Wen, Ningde, Fujian 352100 (CN); LIU, Xuhua, Ningde, Fujian 352100 (CN)
(74) Representative: Ziebig Hengelhaupt Intellectual Property Attorneys Patentanwaltskanzlei PartGmbB
(86) International application number: PCT/CN2024/088655
(87) International publication number: WO 2025/066111

(57) **Abstract**

This application discloses a loading tray and a formation apparatus. The loading tray includes: a support frame; at least two mounting members, where the at least two mounting members are fixedly disposed side by side on the support frame to divide the support frame into at least one accommodating cavity, each mounting member is provided with at least two groups of limiting mounting positions, each group of limiting mounting positions includes at least one limiting mounting position distributed at intervals, and arrangement spacings between all groups of limiting mounting positions are not completely the same; and at least two limiting blocks, where the at least two limiting blocks are respectively detachably disposed corresponding to the limiting mounting positions on the at least two mounting members to define at least one accommodating groove in each accommodating cavity. This solution can improve the compatibility of loading trays and reduce model change costs of loading trays.

## Description

### CROSS-REFERENCE TO RELATED APPLICATIONS

This application claims priority to Chinese Patent Application No. 202311262384X, filed on September 27, 2023, and entitled "LOADING TRAY AND FORMATION APPARATUS", which is incorporated herein by reference in its entirety.

### TECHNICAL FIELD

This application relates to the field of device loading technology, and in particular, to a loading tray and a formation apparatus.

### BACKGROUND

In the existing production process of a to-be-loaded object, a tray is usually used to load the to-be-loaded object to facilitate subsequent processes.

For to-be-loaded objects of different models, it is necessary to provide trays adapted to the to-be-loaded objects. The current methods for model change involve replacing a tray model or replacing a mounting member model to implement loading of to-be-loaded objects of different models.

However, such methods of replacing the tray or mounting member have no compatibility and high model change costs.

### SUMMARY

This application provides at least a loading tray and a formation apparatus.

This application provides a loading tray. The loading tray includes: a support frame, at least two mounting members, and at least two limiting blocks. The at least two mounting members are fixedly disposed side by side on the support frame to divide the support frame into at least one accommodating cavity; where each mounting member is provided with at least two groups of limiting mounting positions, each group of limiting mounting positions includes at least one limiting mounting position distributed at intervals, and arrangement spacings between all groups of limiting mounting positions are not completely the same. The at least two limiting blocks are respectively detachably disposed corresponding to the limiting mounting positions on the at least two mounting members to define at least one accommodating groove in each accommodating cavity.

In the above solution, when the loading tray is for to-be-loaded objects of different models, a size of the formed accommodating groove can be changed by installing the at least two limiting blocks in different groups of limiting mounting positions to adapt to the to-be-loaded objects of different arrangement models, reducing the situation of replacing the mounting member or the entire loading tray while the loading tray is loading the to-be-loaded objects of different arrangement models, by only changing the limiting mounting positions engaged with the multiple limiting blocks. This improves the compatibility of the loading tray with to-be-loaded objects of various models and reduces the model change costs.

In some embodiments, the at least two groups of limiting mounting positions disposed on the mounting member include a first group of limiting mounting positions and a second group of limiting mounting positions, where the limiting mounting positions of the first group of limiting mounting positions are equidistantly arranged according to a first spacing, the limiting mounting positions of the second group of limiting mounting positions are equidistantly arranged according to a second spacing, and the first spacing is not equal to the second spacing.

In the above solution, with the first group of limiting mounting positions and the second group of limiting mounting positions disposed on the mounting member, in the loading tray, the size of the formed accommodating groove can be changed by installing the limiting blocks respectively in the first group of limiting mounting positions or the second group of limiting mounting positions to respectively adapt to to-be-loaded objects of two model sizes, reducing the situation of replacing the mounting member or the entire loading tray while the loading tray is loading the to-be-loaded objects of different arrangement models, by only changing the limiting mounting positions engaged with the multiple limiting blocks. This improves the compatibility of the loading tray with to-be-loaded objects of various models and reduces the model change costs.

In some embodiments, one end of each limiting block close to the corresponding accommodating groove is provided with a limiting groove.

In the above solution, when a to-be-loaded object is loaded in the accommodating groove, bottoms of two ends of the to-be-loaded object are respectively placed in the limiting grooves on the limiting blocks at two ends of the corresponding accommodating groove, thereby limiting the to-be-loaded object through the limiting grooves at the two ends of the accommodating groove, clarifying a loading position for the to-be-loaded object, and further improving the position accuracy and stability of the to-be-loaded object loaded in the loading tray.

In some embodiments, two opposite ends of each limiting block are respectively provided with a first limiting groove and a second limiting groove of different sizes.

In the above solution, the first limiting groove and the second limiting groove of different sizes can respectively correspond to two to-be-loaded objects of different installation sizes. To be specific, when used for corresponding to-be-loaded objects of two sizes, the limiting block can be installed in a different direction to be compatible with the to-be-loaded objects of two sizes, and there is no need to replace the entire limiting block, thereby further improving the compatibility and application range of the loading tray and reducing the model change costs of the limiting block.

In some embodiments, the loading tray further includes at least one separating member; one side of each mounting member close to the accommodating cavity is provided with at least two groups of separation mounting positions, all groups of separation mounting positions are distributed at intervals, and the positions of all groups of separation mounting positions are not completely the same. Two ends of the separating member are respectively movably engaged with the corresponding separation mounting positions on the two opposite sides of the accommodating cavity.

In the above solution, the first group of separation mounting positions and the second group of separation mounting positions can be respectively disposed corresponding to the first group of limiting mounting positions and the second group of limiting mounting positions, to jointly match to-be-loaded objects of different model thicknesses.

In some embodiments, the mounting member includes two first mounting members and at least one second mounting member, the two first mounting members are respectively disposed on two opposite sides of the support frame, and the second mounting member is arranged side by side between the two first mounting members.

In the above solution, the support frame is divided into multiple columns of accommodating cavities by the two first mounting members and the at least one second mounting member, which can improve the loading standardability of the loading tray and facilitate position limit for the to-be-loaded object.

In some embodiments, the first mounting member includes a single-side fixing member and a single-face upright member. The single-face upright member is perpendicular to and fixedly disposed an edge of the single-side fixing member. The single-side fixing member is attached to and detachably disposed on the support frame. One side of the single-face upright member close to the accommodating cavity is provided with at least two groups of separation mounting positions, and the single-side fixing member is provided with at least two groups of limiting mounting positions.

In the above solution, the first mounting member is attached to and detachably disposed on the support frame through the single-side fixing member, so that the single-face upright member perpendicular thereto is uprightly disposed to allow the side provided with the separation mounting positions to face the accommodating cavity, facilitating insertion of the separating member. In addition, the single-side fixing member attached to and detachably disposed on the support frame is provided with at least two groups of limiting mounting positions, so as to be detachably disposed with the limiting block.

In some embodiments, the single-side fixing member is further provided with at least one first fixing hole; the support frame is provided with at least one first through hole; and the first fixing hole corresponds to the first through hole to sleeve a bolt, so as to install the single-side fixing member on the support frame.

In the above solution, the at least one first through hole on the support frame and the corresponding at least one first fixing hole on the single-side fixing member are disposed in a matching manner, so that the first mounting member can be precisely installed at a target position on the support frame and achieve detachable disposition.

In some embodiments, the second mounting member includes a double-side fixing member and a double-face upright member; the double-face upright member is perpendicular to a center line between two opposite sides of the double-side fixing member, and is fixedly disposed; the two opposite sides of the double-side fixing member are both attached to and detachably disposed on the support frame; two opposite sides of the double-face upright member close to the corresponding accommodating cavity are each provided with at least two groups of separation mounting positions; and the two opposite sides of the double-side fixing member are each provided with at least two groups of limiting mounting positions.

In the above solution, the second mounting member is attached to and detachably disposed on the support frame through the double-side fixing member, so that the double-face upright member perpendicular thereto is uprightly disposed to allow the two sides provided with the separation mounting positions to face the accommodating cavity, facilitating insertion of the separating member. In addition, the double-side fixing member attached to and detachably disposed on the support frame is provided with at least two groups of limiting mounting positions, so as to be detachably disposed with the limiting block.

In some embodiments, the two opposite sides of the double-side fixing member are each further provided with at least one second fixing hole; the support frame is provided with at least one first through hole; and the second fixing hole corresponds to the first through hole to sleeve a bolt, so as to install the double-side fixing member on the support frame.

In the above solution, the at least one first through hole on the support frame and the corresponding at least one second fixing hole on the double-side fixing member are disposed in a matching manner, so that the second mounting member can be precisely installed at a target position on the support frame and achieve detachable disposition.

In some embodiments, the limiting mounting position includes a third fixing hole and at least one first limiting pin hole; one side of each limiting block close to the mounting member is correspondingly provided with a second through hole and at least one limiting pin; each limiting pin is inserted into the corresponding first limiting pin hole to limit the limiting block at the limiting mounting position; and the third fixing hole corresponds to the second through hole to sleeve a bolt, so as to install the limiting block at the limiting mounting position.

In the above solution, the at least one first limiting pin hole and the at least one third fixing hole on the limiting mounting position, as well as the at least one limiting pin and the second through hole on each limiting block are disposed in a matching manner, so that the limiting block can be precisely installed at the limiting mounting position and achieve detachable disposition.

This application provides a formation apparatus, including: a frame body, a loading tray, and a power connection assembly. A loading space is formed in the frame body; the loading tray is disposed in the loading space and loaded with a battery cell, and the loading tray includes the loading tray according to any of the above descriptions; and the power connection assembly is fixedly disposed on the frame body and configured to charge and discharge the battery cell in the loading tray.

In the above solution, the loading tray can be utilized to adapt to battery cells of different arrangement models, improving the compatibility of the loading tray with battery cells of various models and reducing the model change costs, thereby improving the efficiency of the formation apparatus in performing formation on battery cells of various models and improving the use convenience of the formation apparatus.

It should be understood that the above general description and the following detailed description are only exemplary and explanatory, and do not limit this application.

### BRIEF DESCRIPTION OF DRAWINGS

The drawings herein are incorporated into the specification and constitute a part of the specification, and these drawings illustrate embodiments consistent with this application, and are used together with the specification to explain the technical solutions of this application.
FIG. 1 is a schematic three-dimensional structural diagram of a loading tray according to an embodiment of this application;
FIG. 2 is a schematic cross-sectional structural diagram of a loading tray according to an embodiment of this application;
FIG. 3 is a schematic structural top view of a mounting member according to an embodiment of this application;
FIG. 4 is a schematic three-dimensional structural diagram of a limiting block according to an embodiment of this application;
FIG. 5 is a schematic structural top view of a limiting block according to an embodiment of this application;
FIG. 6 is a schematic structural front view of a limiting block according to an embodiment of this application;
FIG. 7 is a schematic structural side view of a mounting member according to an embodiment of this application;
FIG. 8 is a schematic structural side view of a first mounting member according to an embodiment of this application;
FIG. 9 is a schematic structural top view of a first mounting member according to an embodiment of this application;
FIG. 10 is a schematic structural bottom view of a loading tray according to an embodiment of this application;
FIG. 11 is a schematic structural side view of a second mounting member according to an embodiment of this application;
FIG. 12 is a schematic structural top view of a second mounting member according to an embodiment of this application;
FIG. 13 is a schematic structural diagram of a limiting mounting position according to an embodiment of this application;
FIG. 14 is a schematic structural diagram of a loading tray in use according to an embodiment of this application; and
FIG. 15 is a schematic structural diagram of a formation apparatus according to an embodiment of this application.

### Reference signs:

loading tray; 110. support frame; 120. mounting member; 130. limiting block; 140. separating member; 111. accommodating cavity; 112. accommodating groove; 113. first through hole;
1200. separation mounting position; 1201. first group of separation mounting positions; 1202. second group of separation mounting positions;
121. limiting mounting position; 1211. first group of limiting mounting positions; 1212. second group of limiting mounting positions;
131. first limiting groove; 132. second limiting groove; 133. limiting groove; 134. height-limiting through groove; 135. limiting pin; 136. second through hole;
122. first mounting member; 123. second mounting member; 124. single-side fixing member; 125. single-face upright member; 126. double-face upright member; 127. double-side fixing member;
151. first limiting pin hole; 152. third fixing hole; 153. first fixing hole; 154. second fixing hole;
180. center line;
200. formation apparatus; 210. frame body; 211. loading space; and 220. power connection assembly.

### DESCRIPTION OF EMBODIMENTS

Embodiments of the technical solutions of this application are described in detail below in conjunction with the drawings. The following embodiments are only used to more clearly illustrate the technical solutions of this application, and therefore are only examples, and cannot be used to limit the protection scope of this application.

In the description of the embodiments of this application, the term "multiple" refers to two or more (including two), similarly, "multiple groups" refers to two or more groups (including two groups), and "multiple pieces" refers to two or more pieces (including two pieces).

In the description of the embodiments of this application, the orientations or positional relationships indicated by technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are based on the orientations or positional relationships shown in the drawings, and are only for ease of describing the embodiments of this application and simplifying the description, rather than indicating or implying that the referred apparatus or element must have a specific orientation, be constructed and operated in a specific orientation, and therefore cannot be understood as a limitation on the embodiments of this application.

In the description of the embodiments of this application, unless otherwise expressly specified and limited, technical terms such as "mounting", "connection", "join", and "fastening" should be understood in a broad sense, for example, it may be a fixed connection, or a detachable connection, or an integral connection; it may be a mechanical connection, or an electrical connection; it may be a direct connection, or a connection through an intermediate medium; or it may be an internal communication between two elements or an interaction relationship between two elements. For those of ordinary skill in the art, the specific meanings of the above terms in the embodiments of this application can be understood according to specific situations.

In order to solve the problem that when a loading tray is used to load to-be-loaded objects of different models, it is usually necessary to replace the tray model or replace the mounting member model, the inventors of this solution provide at least two groups of limiting mounting positions on the mounting member of the loading tray, where all groups of limiting mounting positions are distributed at intervals, and the positions of all groups of limiting mounting positions are not completely the same, so that the accommodating cavity can be divided into accommodating grooves of different sizes by installing the limiting blocks respectively into different groups of limiting mounting positions, enabling accommodating grooves of different sizes to correspondingly load to-be-loaded objects of different models, and achieving model change of the loading tray without replacing a tray or the mounting member, thereby improving the compatibility of the loading tray, and reducing the model change costs of the loading tray.

The loading tray disclosed in the embodiments of this application can be applied to loading of to-be-loaded objects in production scenarios, testing scenarios, or transportation scenarios, and the to-be-loaded objects may include but are not limited to battery cells, packaging substrates, printed circuit boards, to-be-loaded electronic component objects, structural members, or tools. The to-be-loaded electronic component objects may include but are not limited to potentiometers, vacuum tubes, electromechanical components, connectors, to-be-loaded semiconductor discrete objects, to-be-loaded electroacoustic objects, and relays. The structural members may include but are not limited to heat dissipation members, brake pads, and various components. The tools may include but are not limited to grinders, electric wrenches, electric screwdrivers, electric hammers, impact drills, concrete vibrators, and electric planers.

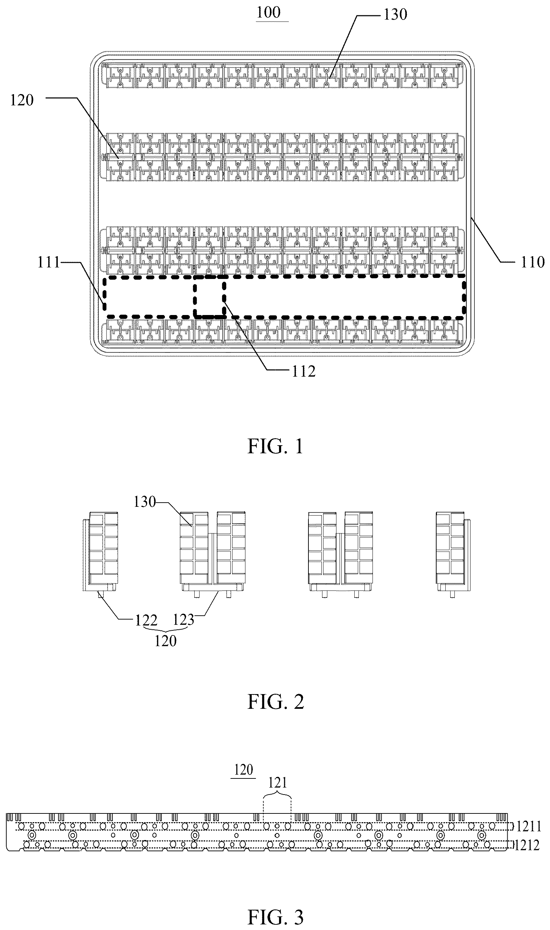

Refer to FIG. 1 to FIG. 3. FIG. 1 is a schematic three-dimensional structural diagram of a loading tray according to an embodiment of this application. FIG. 2 is a schematic cross-sectional structural diagram of a loading tray according to an embodiment of this application. For ease of viewing, a support frame 110 is hidden in FIG. 2. FIG. 3 is a schematic structural top view of a mounting member according to an embodiment of this application.

A loading tray 100 in an embodiment includes: a support frame 110, at least two mounting members 120, and at least two limiting blocks 130. The at least two mounting members 120 are fixedly disposed side by side on the support frame 110 to divide the support frame 110 into multiple accommodating cavities 111. Each mounting member 120 is provided with at least two groups of limiting mounting positions 121, all groups of limiting mounting positions 121 are distributed at intervals, and arrangement spacings of all groups of limiting mounting positions 121 are not completely the same. The at least two limiting blocks 130 are detachably disposed corresponding to one group of limiting mounting positions 121 on the mounting members 120 to define at least one accommodating groove 112 in each accommodating cavity 111.

The support frame 110 is an outer frame of the loading tray 100 and is configured to support the entire loading tray 100. The support frame 110 may be but is not limited to a concave structure, a planar structure, or a vertical structure.

Since one entire loading tray 100 usually needs to load at least one to-be-loaded object, and the at least one to-be-loaded object is preferably arranged in an array in the loading tray 100 to improve its regularity and facilitate subsequent pickup or processing, the at least two mounting members 120 arranged side by side on the support frame 110 are configured to divide the entire accommodating space of the support frame 110 into at least one column of accommodating cavities 111, and each column of accommodating cavities 111 are used for stacked arrangement of at least one to-be-loaded object, to implement regular loading of the to-be-loaded object.

The limiting blocks 130 are structural members disposed at two ends of each accommodating groove 112, and are configured to jack up and limit the to-be-loaded object in each accommodating groove 112, so that the to-be-loaded object can be stably placed in the accommodating groove 112. Since the appearance of the to-be-loaded object is set based on its own characteristics, its appearance may not match the accommodating groove 112, leading to situations such as failure in attachment, looseness, and instability. Therefore, with limiting blocks 130 of a certain height and thickness being disposed at two ends of each accommodating groove 112, the to-be-loaded object in the accommodating groove 112 is positionally fixed, thereby improving the positional stability and accuracy of the to-be-loaded object in the loading tray 100.

Two ends of each accommodating groove 112 are each provided with a limiting block 130, and each limiting block 130 is detachably disposed with the mounting member 120. The number of the limiting blocks 130 in the loading tray 100 is twice the number of the accommodating grooves 112, so that two ends of each accommodating groove 112 are both provided with the limiting blocks 130.

Specific position setting of each group of limiting mounting positions 121 may be correspondingly set based on an arrangement model of the to-be-loaded object. To be specific, the limiting blocks 130 are installed on different groups of limiting mounting positions 121 to form accommodating grooves 112 of different sizes to adapt to loading of to-be-loaded objects of different models. The arrangement models of the to-be-loaded objects corresponding to each group of limiting mounting positions 121 may be completely the same or not completely the same to adapt to different loading requirements. In addition, the at least two groups of limiting mounting positions 121 may include but are not limited to two groups of limiting mounting positions 121, three groups of limiting mounting positions 121, or five groups of limiting mounting positions 121.

In a specific application scenario, under a condition that the at least two groups of limiting mounting positions 121 include three groups of limiting mounting positions 121, and the three groups of limiting mounting positions 121 are respectively in one-to-one correspondence with to-be-loaded objects of three arrangement models, when the at least two limiting blocks 130 are correspondingly installed on the first group of limiting mounting positions 121, the formed accommodating groove 112 can load the corresponding to-be-loaded object of the first arrangement model; when the at least two limiting blocks 130 are correspondingly installed on the respective second group of limiting mounting positions 121, the formed accommodating groove 112 can load the corresponding to-be-loaded object of the second arrangement model; and when the at least two limiting blocks 130 are correspondingly installed on the respective third group of limiting mounting positions 121, the formed accommodating groove 112 can load the corresponding to-be-loaded object of the third arrangement model. Thus, the loading tray 100 of this embodiment can adapt to to-be-loaded objects of different arrangement models by installing the limiting blocks 130 in different groups of limiting mounting positions 121, reducing the model change costs of the loading tray 100.

To be specific, in this embodiment, the mounting members 120 and the limiting blocks 130 are provided to divide the entire accommodating space of the support frame 110 into accommodating grooves 112 arranged in arrays, and one to-be-loaded object can be correspondingly loaded in one accommodating groove 112, enabling the to-be-loaded objects loaded in the accommodating grooves 112 to be arranged in arrays and positionally fixed on the loading tray 100, thereby facilitating operations such as multi-procedure processing or testing on the to-be-loaded objects loaded in the loading tray 100.

Through the above structure, when the loading tray 100 of this embodiment is used for to-be-loaded objects of different models, the size of the formed accommodating groove 112 can be changed by installing the at least two limiting blocks 130 in different groups of limiting mounting positions 121 to adapt to to-be-loaded objects of different arrangement models, reducing the situation of replacing the mounting members 120 or the entire loading tray 100 while the loading tray 100 is loading to-be-loaded objects of different arrangement models, by only changing the limiting mounting positions 121 engaged with the multiple limiting blocks 130. This improves the compatibility of the loading tray 100 with to-be-loaded objects of various models and reduces the model change costs.

According to some embodiments of this application, further referring to FIG. 3, the at least two groups of limiting mounting positions 121 disposed on each mounting member 120 include a first group of limiting mounting positions 1211 and a second group of limiting mounting positions 1212. The limiting mounting positions 121 in the first group of limiting mounting positions 1211 are equidistantly arranged according to a first spacing, the limiting mounting positions 121 in the second group of limiting mounting positions 1212 are equidistantly arranged according to a second spacing, and the first spacing is not equal to the second spacing.

When the limiting block 130 is installed on the first group of limiting mounting positions 1211, a width of the formed accommodating groove 112 is the first spacing, and when the limiting block 130 is installed on the second group of limiting mounting positions 1212, the width of the formed accommodating groove 112 is the second spacing.

Specific values of the first spacing and the second spacing are both determined according to a model thickness of a corresponding to-be-loaded object.

In the above solution, the first group of limiting mounting positions 1211 and the second group of limiting mounting positions 1212 are disposed on the mounting member 120, so that the size of the formed accommodating groove 112 in the loading tray 100 can be changed by installing the limiting blocks 130 respectively in the first group of limiting mounting positions 1211 or the second group of limiting mounting positions 1212, to respectively adapt to to-be-loaded objects of two model sizes, reducing the situation of replacing the mounting members 120 or the entire loading tray 100 while the loading tray 100 is loading to-be-loaded objects of different models, by only adjusting the limiting mounting positions 121 that the multiple limiting blocks 130 can be engaged with. This improves the compatibility of the loading tray 100 with to-be-loaded objects of various models and reduces the model change costs.

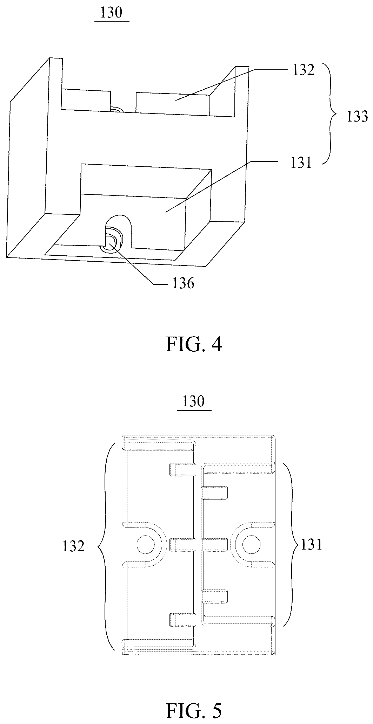

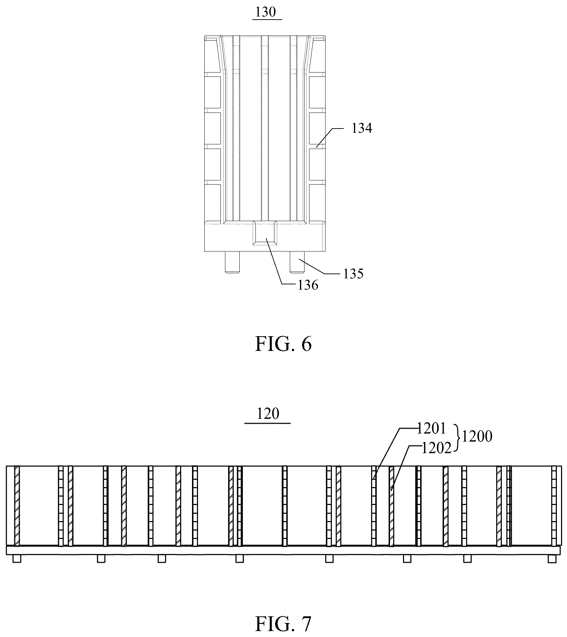

Further refer to FIG. 4 to FIG. 6. FIG. 4 is a schematic three-dimensional structural diagram of a limiting block according to an embodiment of this application. FIG. 5 is a schematic structural top view of a limiting block according to an embodiment of this application. FIG. 6 is a schematic structural front view of a limiting block according to an embodiment of this application.

According to some embodiments of this application, one end of each limiting block 130 close to the corresponding accommodating groove 112 is provided with a limiting groove 133. The limiting groove 133 is configured to place the to-be-loaded object, so as to limit the to-be-loaded object.

The size and shape of the limiting groove 133 may be set based on a bottom size and shape of the to-be-loaded object. In a specific application scenario. When the bottom of the to-be-loaded object is provided with a protrusion, the limiting groove 133 may be a groove disposed on a top surface of the limiting block 130, and four sides of the groove are closed, so that the protrusion at the bottom of the to-be-loaded object is inserted into the groove for position limit. In another specific application scenario, when the bottom of the to-be-loaded object is flat, the limiting groove 133 may be a vertical open groove disposed on the top surface of the limiting block 130, and a side of the vertical open groove close to the oppositely disposed limiting block 130 is also open, so that the bottoms of two sides of the to-be-loaded object are respectively placed in the vertical open grooves at two ends of the accommodating groove 112 for position limit. When the bottom of the to-be-loaded object is of another size and shape, the size and shape of the limiting groove 133 match the size and shape of the to-be-loaded object.

When a to-be-loaded object is loaded in the accommodating groove 112, the above structure enables bottoms of two ends of the to-be-loaded object to be respectively placed in the limiting grooves 133 on the limiting blocks 130 at two ends of the corresponding accommodating groove 112, thereby limiting the to-be-loaded object through the limiting grooves 133 at the two ends of the accommodating groove 112, clarifying the loading position of the to-be-loaded object, and further improving the position accuracy and stability of the to-be-loaded object loaded in the loading tray 100.

One end of the limiting groove 133 close to the corresponding accommodating groove 112 may be an opening, and in a vertical direction, multiple height-limiting through grooves 134 are correspondingly disposed on groove walls on two sides of the opening, and the height-limiting through grooves 134 are for inserting height-limiting members (not shown in the figure) to adjust a limiting height of the limiting groove 133.

In the above solution, the limiting height of the limiting groove 133 can be changed by inserting the height-limiting members into height-limiting through grooves 134 of different heights, enabling the limiting groove 133 to limit to-be-loaded objects of the same thickness but different heights, and further improving the compatibility of the limiting groove 133, thereby further improving the compatibility and application range of the loading tray 100 and reducing the model change costs.

According to some embodiments of this application, two opposite ends of each limiting block 130 are respectively provided with a first limiting groove 131 and a second limiting groove 132 of different sizes.

In the above structure, the first limiting groove 131 and the second limiting groove 132 of different sizes can respectively correspond to two to-be-loaded objects of different installation sizes. To be specific, for to-be-loaded objects of two corresponding sizes, the limiting block 130 can be directly installed in a different direction to achieve the compatibility with to-be-loaded objects of two sizes, without replacing the entire limiting block 130, thereby further improving the compatibility and application range of the loading tray 100 and reducing the model change costs of the limiting block 130.

Refer to FIG. 7. FIG. 7 is a schematic structural side view of a mounting member according to an embodiment of this application.

According to some embodiments of this application, the loading tray 100 further includes at least one separating member 140; and one side of each mounting member 120 close to the accommodating cavity 111 is provided with at least two groups of separation mounting positions 1200, so that two opposite sides of each accommodating cavity 111 are both provided with the separation mounting positions 1200. The separation mounting positions 1200 may include but are not limited to installation structures such as grooves, engagement positions, or clamping plates disposed on the mounting member 120.

All groups of separation mounting positions 1200 are distributed at intervals, and the positions of all groups of separation mounting positions 1200 are not completely the same. Two ends of the separating member 140 are respectively movably engaged with one group of separation mounting positions 1200 corresponding to two opposite sides of the accommodating cavity 111, so as to separate every two adjacent accommodating grooves 112.

The separating member 140 may be used for separation and protection. For example, when the to-be-loaded object is an electronic device, situations such as short circuit, failure, and fire may occur, and the provision of the separating member 140 can reduce the situation of other adjacent to-be-loaded objects being affected when the above problems occur in a certain to-be-loaded object. The material of the separating member 140 may include but is not limited to phenolic foam (PF), ceramics, fire-resistant glass, and other flame-retardant insulating materials.

One side of each mounting member 120 close to the accommodating cavity 111 is provided with at least two groups of separation mounting positions 1200, all groups of separation mounting positions 1200 are distributed at intervals, and the positions of all groups of separation mounting positions 1200 are not completely the same.

The at least two groups of separation mounting positions 1200 are disposed corresponding to the at least two groups of limiting mounting positions 121 to correspondingly match to-be-loaded objects of different arrangement spacings. The limiting mounting positions 121 are used for installing the limiting blocks 130 to realize position limit through the limiting blocks 130, at least one accommodating groove 112 is formed in the loading tray 100, and the separation mounting positions 1200 are used for installing the separating members 140 to ensure that the separating members 140 are located at the edges on two opposite sides of the accommodating groove 112, thereby separating the accommodating grooves 112.

In the above solution, the separation mounting positions 1200 are disposed on one side of each mounting member 120 close to the accommodating cavity 111, so as to be engaged with the separating member 140, so that the separating member 140 is used to separate the accommodating grooves 112, reducing the mutual influence of the to-be-loaded objects in each accommodating groove 112, and improving the safety of the to-be-loaded object loaded in the loading tray 100. In addition, one side of the mounting member 120 close to the accommodating cavity 111 is provided with at least two groups of separation mounting positions 1200, enabling adaptation to to-be-loaded objects of different arrangement models by changing the separation mounting positions 1200 engaged with the separating member 140 in cooperation with the limiting block 130, thereby increasing the applicable scenarios of the loading tray 100, and reducing the model change costs of the loading tray 100.

Further refer to FIG. 7. This embodiment is described by using an example in which one side of each mounting member 120 close to the accommodating cavity 111 is provided with two groups of separation mounting positions 1200, and when one side of each mounting member 120 close to the accommodating cavity 111 is provided with another number of groups of separation mounting positions 1200, the structure is similar, which is not described in detail again.

The two groups of separation mounting positions 1200 on one side of each mounting member 120 close to the accommodating cavity 111 include a first group of separation mounting positions 1201 and a second group of separation mounting positions 1202.

Every two adjacent first groups of separation mounting positions 1201 may be equidistantly arranged according to a first spacing; every two adjacent second groups of separation mounting positions 1202 may be equidistantly arranged according to a second spacing; and the first spacing is not equal to the second spacing.

The above first group of separation mounting positions 1201 and second group of separation mounting positions 1202 may be respectively disposed corresponding to the first group of limiting mounting positions 1211 and the second group of limiting mounting positions 1212 to jointly match to-be-loaded objects of different model thicknesses.

Further referring to FIG. 2, according to some embodiments of this application, the mounting member 120 includes two first mounting members 122 and at least one second mounting member 123. The two first mounting members 122 are respectively disposed on two opposite sides of the support frame 110, and the second mounting members 123 can be evenly arranged side by side between the two first mounting members 122, so that the range of each column of accommodating cavities 111 is consistent, and the second mounting members 123 may alternatively be unevenly arranged side by side between the two first mounting members 122 to adapt to different accommodating requirements of the accommodating cavities 111.

The first mounting member 122 is the mounting member 120 disposed at the edge of the support frame 110, and the second mounting member 123 is the mounting member 120 disposed in a central region of the support frame 110. The number of the second mounting members 123 is set based on the size of the support frame 110 and the size of the to-be-loaded object, which may include but is not limited to 1, 2, 3, or 4. The number being 2 is used as an example for description in this embodiment.

In the above solution, the support frame 110 is divided into multiple columns of accommodating cavities 111 by the two first mounting members 122 and the at least one second mounting member 123, which can improve the loading standardability of the loading tray 100 and facilitate position limit for the to-be-loaded object.

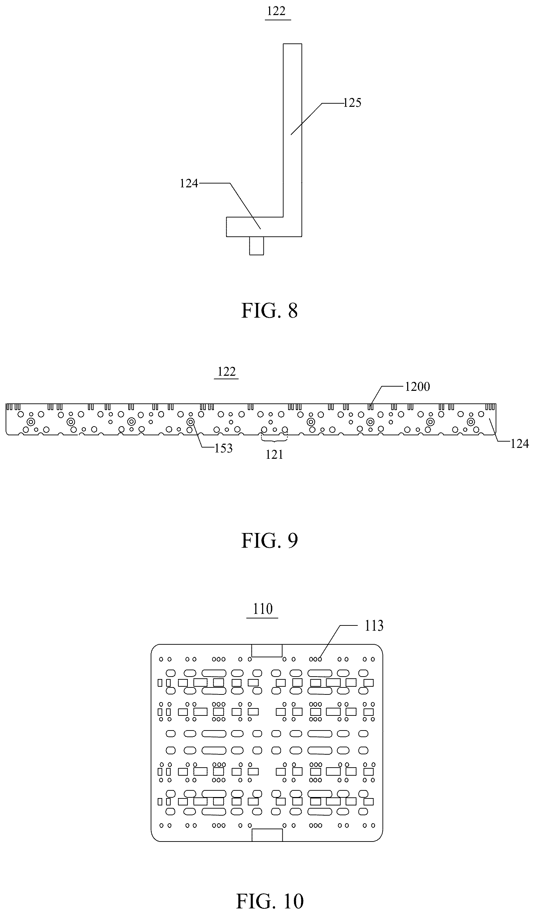

Further refer to FIG. 8. FIG. 8 is a schematic structural side view of a first mounting member according to an embodiment of this application.

According to some embodiments of this application, the first mounting member 122 includes a single-side fixing member 124 and a single-face upright member 125 that are perpendicular to each other.

The single-face upright member 125 is an upright member with at least two groups of separation mounting positions 1200 disposed on a single side surface. Specifically, one side of the single-face upright member 125 close to the accommodating cavity 111 is provided with at least two corresponding groups of separation mounting positions 1200. The single-side fixing member 124 is a fixing member attached to and detachably disposed on the support frame 110 on a single side of the single-face upright member 125. The single-side fixing member 124 is provided with at least two groups of limiting mounting positions 121.

The single-face upright member 125 is perpendicular to and fixedly disposed on an edge of the single-side fixing member 124, and the single-side fixing member 124 is attached to and detachably disposed on the support frame 110.

In the above structure, the first mounting member 122 is attached to and detachably disposed on the support frame 110 through the single-side fixing member 124, so that the single-face upright member 125 perpendicular thereto is uprightly disposed to allow the side provided with the separation mounting positions 1200 to face the accommodating cavity 111, facilitating insertion of the separating member 140. In addition, the single-side fixing member 124 attached to and detachably disposed on the support frame 110 is provided with at least two groups of limiting mounting positions 121, so as to be detachably disposed with the limiting block 130.

Further refer to FIG. 6, FIG. 9, and FIG. 10. FIG. 9 is a schematic structural top view of a first mounting member according to an embodiment of this application. FIG. 10 is a schematic structural bottom view of a loading tray according to an embodiment of this application.

According to some embodiments of this application, the single-side fixing member 124 is further provided with at least one first fixing hole 153; the at least one first fixing hole 153 is arranged side by side on the single-side fixing member 124; the support frame 110 is provided with at least one first through hole 113; and the first fixing hole 153 corresponds to the first through hole 113 to sleeve a bolt, so as to install the single-side fixing member 124 on the support frame 110.

When it is necessary to replace the first mounting member 122 for the loading tray 100, the first mounting member 122 can be dismounted by only dismounting the bolt.

In the above structure, the at least one first through hole 113 on the support frame 110 and the corresponding at least one first fixing hole 153 on the single-side fixing member 124 are disposed in a matching manner, so that the first mounting member 122 can be precisely installed at a target position on the support frame 110 and achieve detachable disposition.

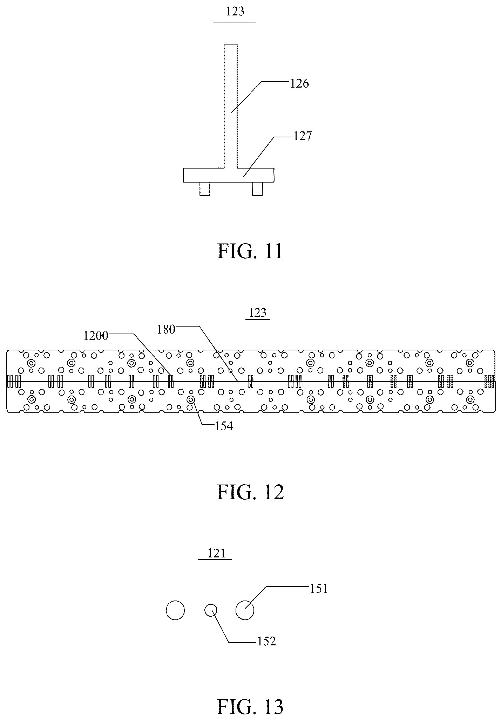

Further refer to FIG. 11. FIG. 11 is a schematic structural side view of a second mounting member according to an embodiment of this application.

According to some embodiments of this application, the second mounting member 123 includes a double-side fixing member 127 and a double-face upright member 126.

Two opposite sides of the double-face upright member 126 close to the accommodating cavity 111 are provided with at least two corresponding groups of separation mounting positions 1200. In addition, the double-side fixing member 127 is a fixing member with two opposite sides both attached to and detachably disposed on the support frame 110.

The two opposite sides of the double-face upright member 126 of the second mounting member 123 are each provided with the accommodating cavity 111. Therefore, the two opposite sides of the double-face upright member 126 are each provided with at least two corresponding groups of limiting mounting positions 121 for respectively installing different limiting blocks 130 to form accommodating grooves 112 of different sizes. The two opposite sides of the double-side fixing member 127 are each provided with at least two groups of separation mounting positions 1200 which are to be engaged with the separating members 140 based on the accommodating grooves 112 of different sizes.

The double-face upright member 126 is perpendicular to a center line 180 of the two opposite sides of the double-side fixing member 127, and is fixedly disposed, and the double-side fixing member 127 is attached to and detachably disposed on the support frame 110.

The center line 180 of the double-side fixing member 127 is a connection line of midpoints of short sides on the two opposite sides of the double-side fixing member 127.

In the above structure, the second mounting member 123 is attached to and detachably disposed on the support frame 110 through the double-side fixing member 127, so that the double-face upright member 126 perpendicular thereto is uprightly disposed to allow two sides provided with the separation mounting positions 1200 to face the accommodating cavity 111, facilitating insertion of the separating member 140. In addition, the double-side fixing member 127 attached to and detachably disposed on the support frame 110 is provided with at least two groups of limiting mounting positions 121, so as to be detachably disposed with the limiting block 130.

Further refer to FIG. 6, FIG. 10, and FIG. 12. FIG. 12 is a schematic structural top view of a second mounting member according to an embodiment of this application.

According to some embodiments of this application, the two opposite sides of the double-side fixing member 127 are each further provided with at least one second fixing hole 154; the support frame 110 is provided with at least one first through hole 113; and the second fixing hole 154 corresponds to the first through hole 113 to sleeve a bolt, so as to install the double-side fixing member 127 on the support frame 110.

When it is necessary to replace the second mounting member 123 for the loading tray 100, the second mounting member 123 can be dismounted by only dismounting the bolt.

In the above structure, the at least one first through hole 113 on the support frame 110 and the corresponding at least one second fixing hole 154 on the double-side fixing member 127 are disposed in a matching manner, so that the second mounting member 123 can be precisely installed at a target position on the support frame 110 and achieve detachable disposition.

Further refer to FIG. 13. FIG. 13 is a schematic structural diagram of a limiting mounting position according to an embodiment of this application.

According to some embodiments of this application, the limiting mounting position 121 includes a third fixing hole 152 and at least one first limiting pin hole 151. Further refer to FIG. 6, one side of each limiting block 130 close to the mounting member 120 is correspondingly provided with at least one limiting pin 135 and a second through hole 136.

The first limiting pin hole 151 is configured to insert the limiting pin 135 on the limiting block 130, and the third fixing hole 152 is configured to have a bolted connection with the second through hole 136 on the limiting block 130, to achieve detachable disposition between the first mounting member 122 and the support frame 110.

The number and positions of the limiting pins 135 on the limiting block 130 are correspondingly the same as the number and positions of the first limiting pin holes 151 on the limiting mounting position 121 to realize one-to-one correspondence and matching. The number of the limiting pins 135 on one limiting block 130 and the number of the first limiting pin holes 151 on one limiting mounting position 121 may include but are not limited to 1, 2, 3, or 4.

Each limiting pin 135 is inserted into the corresponding first limiting pin hole 151 to limit the limiting block 130 at the limiting mounting position 121.

The third fixing hole 152 corresponds to the second through hole 136 to sleeve a bolt (not shown in the figure), so as to detachably dispose the limiting block 130 at the limiting mounting position 121. When it is necessary to replace the limiting block 130 for the loading tray 100, the limiting block 130 can be pulled out by only dismounting the bolt and pulling the limiting pin 135 out of the first limiting pin hole 151.

In the above structure, the at least one first limiting pin hole 151 and the at least one third fixing hole 152 on the limiting mounting position 121, as well as the at least one limiting pin 135 and the second through hole 136 on each limiting block 130 are disposed in a matching manner, so that the limiting block 130 can be precisely installed at the limiting mounting position 121 and achieve detachable disposition.

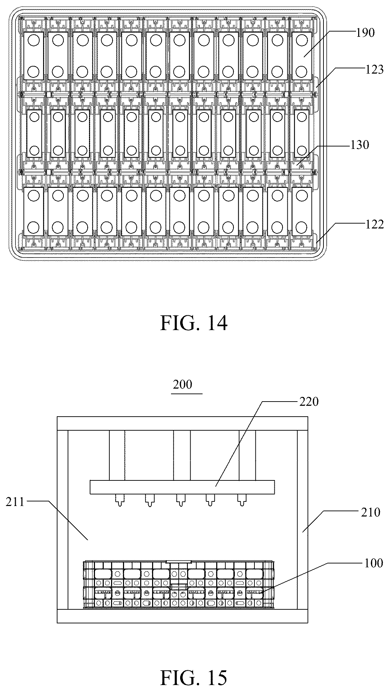

Further refer to FIG. 14. FIG. 14 is a schematic structural diagram of a loading tray in use according to an embodiment of this application.

According to some embodiments of this application, the loading tray 100 is loaded with a battery cell 190.

According to the loading tray 100 of this embodiment, the mounting member 120 is provided with at least two groups of limiting mounting positions 121, and each group of limiting mounting positions 121 can be used to correspondingly limit battery cells 190 of different channels, so that the limiting blocks 130 can be installed at different groups of limiting mounting positions 121 to divide each column of accommodating cavities 111 into multiple accommodating grooves 112 of different sizes, thereby adapting to battery cells 190 of different channels. The number of the channel is equal to the number of the battery cells 190 that can be placed in one column of accommodating cavities 111.

In a specific application scenario, when the at least two groups of limiting mounting positions 121 on each mounting member 120 include a first group of limiting mounting positions 1211 and a second group of limiting mounting positions 1212, a first spacing between the first group of limiting mounting positions 1211 may be set based on a model thickness of battery cells 190 of 12 channels, and a first spacing between the second group of limiting mounting positions 1212 may be set based on a model thickness of battery cells 190 of 10 channels. Therefore, when it is necessary to change the loading tray 100 from loading battery cells 190 of 12 channels to loading battery cells 190 of 10 channels, there is only a need to dismount the limiting blocks 130 from the first group of limiting mounting positions 1211 and reinstall them at the second group of limiting mounting positions 1212, without replacing the loading tray 100 or the mounting member 120, thereby improving the compatibility of the loading tray 100 and reducing the model change costs of the loading tray 100.

Two opposite ends of each limiting block 130 are respectively provided with a first limiting groove 131 and a second limiting groove 132 of different sizes, and the first limiting groove 131 and the second limiting groove 132 can respectively adapt to loading of battery cells 190 of different sizes under a same channel.

In a specific application scenario, the first limiting groove 131 and the second limiting groove 132 may be applied to loading of battery cells 190 of different sizes under 12 channels. If the first limiting groove 131 originally faces the accommodating cavity 111 to load a battery cell A, the limiting block 130 can be removed and then installed upside down on the mounting member 120, so that the second limiting groove 132 faces the accommodating cavity 111 to load a battery cell B.

Thus, in loading scenarios of battery cells 190 of different sizes under the same channel, battery cells 190 of different sizes can be loaded by only changing an installation direction of the limiting block 130, further improving the compatibility of the loading tray 100 and reducing the model change costs of the loading tray 100.

When the loading tray 100 of this embodiment is used to load a battery cell 190, after the battery cell 190 is loaded, the loading tray 100 can be placed in the formation apparatus so that a formation apparatus charges and discharges the battery cell 190 for formation. Alternatively, the loading tray 100 may be placed on a shelf, and high-temperature infiltration is performed on the battery cell 190 by changing the environmental temperature of the loading tray 100. Alternatively, the loading tray 100 may be placed on a shelf for a period of time to undergo a self-discharge test, and the like.

Further refer to FIG. 15. FIG. 15 is a schematic structural diagram of a formation apparatus according to an embodiment of this application.

The formation apparatus 200 includes: a frame body 210, a loading tray 100, and a power connection assembly 220.

The frame body 210 is provided with a loading space 211; the loading tray 100 is disposed in the loading space 211 and loaded with a battery cell; and the power connection assembly 220 is fixedly disposed on the frame body 210 and configured to charge and discharge the battery cell in the loading tray 100.

The frame body 210 is a main frame structure of the formation apparatus 200, and is configured to support the entire formation apparatus 200. The loading space 211 is used for placing the loading tray 100. The power connection assembly 220 is configured to be electrically connected to the battery cell loaded in the loading tray 100 so as to charge and discharge the battery cell in the loading tray 100, thereby implementing formation.

The loading tray 100 of this embodiment includes the loading tray 100 of the above embodiments.

The above solution enables the loading tray 100 to adapt to battery cells of different arrangement models, improving the compatibility of the loading tray 100 with battery cells of various models and reducing the model change costs, thereby improving the efficiency of the formation apparatus 200 in performing formation on battery cells of various models and improving the use convenience of the formation apparatus 200.

The above descriptions of the embodiments tend to emphasize the differences between the embodiments, and the same or similar parts can refer to each other, and for brevity, details are not described herein again.

In conclusion, it should be noted that: the above embodiments are only used to illustrate the technical solutions of this application, rather than limiting them; although this application has been described in detail with reference to the foregoing embodiments, those of ordinary skill in the art should understand that: they can still modify the technical solutions recorded in the foregoing embodiments, or make equivalent replacements to some or all of the technical features; and these modifications or replacements do not make the essence of the corresponding technical solutions depart from the scope of the technical solutions of the embodiments of this application, and they should all be covered within the scope of the claims and specification of this application. In particular, as long as there is no structural conflict, the technical features mentioned in each embodiment can be combined in any manner. This application is not limited to the specific embodiments disclosed herein, but includes all technical solutions falling within the scope of the claims.

## Claims

1. A loading tray, wherein the loading tray comprises:
a support frame;
at least two mounting members, wherein the at least two mounting members are fixedly disposed side by side on the support frame to divide the support frame into at least one accommodating cavity, the mounting member is provided with at least two groups of limiting mounting positions, each group of limiting mounting positions comprises at least one limiting mounting position distributed at intervals, and arrangement spacings between each group of limiting mounting positions are not completely the same; and
at least two limiting blocks, wherein the at least two limiting blocks are respectively detachably disposed corresponding to the limiting mounting positions on the at least two mounting members to define at least one accommodating groove in each accommodating cavity.

2. The loading tray according to claim 1, wherein
the at least two groups of limiting mounting positions disposed on the mounting member comprise a first group of limiting mounting positions and a second group of limiting mounting positions;
wherein the limiting mounting positions of the first group of limiting mounting positions are equidistantly arranged according to a first spacing, the limiting mounting positions of the second group of limiting mounting positions are equidistantly arranged according to a second spacing, and the first spacing is not equal to the second spacing.

3. The loading tray according to claim 1, wherein
one end of each limiting block close to the corresponding accommodating groove is provided with a limiting groove.

4. The loading tray according to claim 3, wherein
two opposite ends of each limiting block are respectively provided with a first limiting groove and a second limiting groove of different sizes.

5. The loading tray according to any one of claims 1 to 4, wherein the loading tray further comprises at least one separating member;
one side of each mounting member close to the accommodating cavity is provided with at least two groups of separation mounting positions, all groups of separation mounting positions are distributed at intervals, and the positions of all groups of separation mounting positions are not completely the same; and
two ends of the separating member are respectively movably engaged with the corresponding separation mounting positions on two opposite sides of the accommodating cavity.

6. The loading tray according to claim 5, wherein the mounting member comprises two first mounting members and at least one second mounting member; and
the two first mounting members are respectively disposed on two opposite sides of the support frame, and the second mounting member is arranged side by side between the two first mounting members.

7. The loading tray according to claim 6, wherein the first mounting member comprises a single-side fixing member and a single-face upright member; and
the single-face upright member is perpendicular to and fixedly disposed on an edge of the single-side fixing member, and the single-side fixing member is attached to and detachably disposed on the support frame;
wherein one side of the single-face upright member close to the accommodating cavity is provided with at least two groups of separation mounting positions, and the single-side fixing member is provided with at least two groups of limiting mounting positions.

8. The loading tray according to claim 7, wherein the single-side fixing member is further provided with at least one first fixing hole; and
the support frame is provided with at least one first through hole, and the first fixing hole corresponds to the first through hole to sleeve a bolt, so as to install the single-side fixing member on the support frame.

9. The loading tray according to claim 6, wherein the second mounting member comprises a double-side fixing member and a double-face upright member;
the double-face upright member is perpendicular to a center line between two opposite sides of the double-side fixing member, and is fixedly disposed;
two opposite sides of the double-side fixing member are both attached to and detachably disposed on the support frame; and
two opposite sides of the double-face upright member close to the corresponding accommodating cavity are each provided with at least two groups of the separation mounting positions, and two opposite sides of the double-side fixing member are each provided with at least two groups of the limiting mounting positions.

10. The loading tray according to claim 9, wherein
two opposite sides of the double-side fixing member are each further provided with at least one second fixing hole; and
the support frame is provided with at least one first through hole, and the second fixing hole corresponds to the first through hole to sleeve a bolt, so as to install the double-side fixing member on the support frame.

11. The loading tray according to any one of claims 7 to 10, wherein
the limiting mounting position comprises a third fixing hole and at least one first limiting pin hole; and
one side of each limiting block close to the mounting member is correspondingly provided with a second through hole and at least one limiting pin, each limiting pin is inserted into the corresponding first limiting pin hole to limit the limiting block at the limiting mounting position, and the third fixing hole corresponds to the second through hole to sleeve a bolt, so as to install the limiting block at the limiting mounting position.

12. A formation apparatus, wherein the formation apparatus comprises:
a frame body, wherein a loading space is formed in the frame body;
a loading tray, wherein the loading tray is disposed in the loading space and loaded with a battery cell, and the loading tray comprises the loading tray according to any one of claims 1 to 11; and
a power connection assembly, wherein the power connection assembly is fixedly disposed on the frame body and configured to charge and discharge the battery cell in the loading tray.
